# EUROPEAN PATENT APPLICATION

(11) **EP 4 425 121 A1**
(43) Date of publication of application: **04.09.2024**
(21) Application number: 23159786.5
(22) Date of filing: 02.03.2023
(51) Int. Cl.: G01G 23/01, G01G 23/02, G01G 21/28, G01G 21/26

(54) **WEIGHING DEVICE, SYSTEM COMPRISING THE WEIGHING DEVICE, AND METHOD FOR DETERMINING A WEIGHT**

(71) Applicant: Mettler-Toledo GmbH, 8606 Greifensee (CH)
(72) Inventor: Zehnder, Marc, Uster (CH); Egg, Fabio, Greifensee (CH); Lüdi, Beat, Greifensee (CH)
(74) Representative: Mettler-Toledo

(57) **Abstract**

Disclosed is a weighing device (1) comprising a chassis (2), a load cell, and a weighing pan (14) functionally coupled to the load cell. The weighing device further comprises a locking device (3) adapted and configured to selectively fix the weighing pan relative to the chassis of the weighing device. The locking device may be used to fix the weighing pan relative to the chassis of the weighing device prior to placing objects onto the weighing pan and prior to removing objects from the weighing pan, so as to inhibit inducing swings of the weighing pan, impulses and shocks on the load cell, and other detrimental effects by loading and unloading the weighing pan. Further disclosed are a system comprising the weighing device and a method for weight determination.

## Description

### Technical Field

The herein claimed invention relates to weighing devices, in particular balances, such as mass comparators, weighing systems comprising such a weighing device, and related weighing methods.

### Background Art

When loading the weighing pan of a weighing device, or balance, the weighing pan can easily be deflected from a resting state or resting position, thus inducing oscillating swings of the weighing pan. It is thus difficult to position objects precisely onto the weighing pan, i.e. placing the weighing good or set of weighing goods in the gravimetric center of the weighing pan. This applies to both manual loading and automated loading of the weighing pan. So called off-corner loading or eccentricity of the load on the weighing pan causes inaccuracy of weight determination and is in fact a main error source, in particular in high precision balances, such as, while not limited to, mass comparators. Moreover, if the actual measurement is taken before the weighing pan has come to a rest again, oscillating forces from the swinging weighing pan with measurement goods thereon are transferred to the load cell, resulting in a further measurement error. However, waiting until the weighing pan has come to a rest again before taking a reading from the load cell may prove time-consuming. Further, the load cell may suffer from loading or unloading impulses. It may thus be desired to avoid deflections and oscillations of the weighing pan caused by loading and unloading of the weighing pan.

### Summary of invention

It is an object of the herein disclosed subject matter to provide a device and method of the type initially mentioned. In more specific aspects, the herein disclosed subject matter shall improve the art and overcome certain of the above-mentioned drawbacks and issues, or fulfil at least some of the above-mentioned requirements, respectively. In one aspect, precise positioning of weighing goods on the weighing pan shall be enabled. In more specific aspects, it shall be enabled to load, and in particular also to unload, the weighing pan with weighing goods while avoiding deflections of the weighing pan from its neutral resting position and thus caused swinging oscillations of the weighing pan and/or potentially harmful impulses on the load cell. The resting position or neutral position of the weighing pan shall be understood as the position and spatial orientation of the weighing pan in a motionless state without external forces applied thereto apart from gravitational forces.

This is enabled by the device defined in claim 1 and the method set forth in the independent method claim. Further effects and advantages of the disclosed subject matter, whether explicitly mentioned or not, will become apparent in view of the disclosure provided below.

Accordingly, disclosed is a weighing device comprising a chassis, a load cell, and a weighing pan functionally coupled to the load cell. The load cell is essentially a transducer for transforming a physical signal depending on the weight provided on the weighing pan to an electrical signal. The weighing pan being functionally coupled to the load cell means that a force induced by an object, or weight, respectively, which is placed on top of the weighing pan, is transmitted to the load cell and is transformed into an electric signal by the load cell, as is well-known to the person having skill in the art. The skilled person will readily appreciate that a weighing device has a clear and unique top and bottom and thus a clear and unique up-down orientation. The terms "vertical" and "horizontal" are thus clearly defined orientations in the context of a weighing device, as well as top and bottom sides are clearly defined. Terms referring to a vertical orientation of a weighing device, like top, bottom, above, below, higher, lower and so forth, are readily identified by virtue of the structure of the weighing device and thus have a clear and unique meaning to a person having ordinary skill in the art in the context of a weighing device. The weighing device further comprises a locking device adapted and configured to selectively fix the weighing pan relative to the chassis of the weighing device. Fixing the weighing pan shall be construed as immobilizing the weighing pan relative to the chassis of the weighing device and actually locking the weighing pan and securing the weighing pan in a particular, well-defined position. It is understood that fixing the weighing pan, in the sense used within the framework of the present disclosure, in particular relates to horizontally immobilizing the weighing pan, i.e., fixing and securing the weighing pan in particular against swinging movements. However, a vertical support of the weighing pan may still have play and allow vertical displacement of the weighing pan. Said well-defined position may more in particular be the resting position or neutral position of the weighing pan in which the weighing pan rests in a motionless state without forces applied thereto apart from gravitational forces. Thus, fixing the weighing pan defines over providing an end stop for swinging movements of the weighing pan or damping oscillating swinging movements of the weighing pan. The term "selectively fix" shall be construed in a manner that the weighing pan may be fixed and released as desired or needed, by controlled actuation of the locking device. "Fixing" and "locking" the weighing pan are within the framework of this document used synonymously and shall both be understood as immobilizing the weighing pan relative to the chassis of the weighing device.

In particular, while non-limiting embodiments the locking device may be adapted and configured to, in addition to fixing the weighing pan, to be reversibly brought into contact with a bottom face of the weighing pan and into a support relationship with the weighing pan in which the locking device supports, i.e., bears the weight of, the weighing pan. That means, the weighing pan then is not only be horizontally fixed by the locking device, but is also be supported by the weighing device, rather than being supported, or in embodiments, suspended directly or indirectly by the load cell. "Reversibly" shall in this respect mean that the locking device can also be operated to again terminate the support relationship with the weighing pan such that the weighing pan is again supported, directly or indirectly by the load cell. The support arrangement for the weighing pan which transmits forced to the load cell and which supports the weighing pan during measurements is within the framework of the present disclosure also referred to as the "functional support". Supporting the weighing pan by the locking device may include lifting the weighing pan if the vertical support has play. Supporting the weighing pan on the locking device, in addition to horizontally fixing the weighing pan, may yield various advantageous effects. For one thing, forces acting on the weighing pan during loading and unloading of the weighing pan do not act on sensitive elements of the weighing device participating in the weighing process, e.g., the load cell and those elements transferring forces from the weighing pan to the load cell. Introducing forces, shocks, vibrations etc. into these elements is hence significantly reduced, if not avoided. For another thing, the weighing pan may be more precisely positioned for placing objects thereon. This improves reproducibility of the positioning of objects on the weighing pan and thus increases even further reproducibility and precision of measurements. The weighing pan may be lifted to an extent by which the weighing pan is mechanically disconnected from the sensitive elements of the weighing device participating in the weighing process, in particular from the load cell. The coupling of the weighing pan to the load cell may involve a releasable point of attachment which may be released by lifting the weighing pan and reconnected by lowering the weighing pan again. It may be found advantageous if supporting the weighing pan on the locking device or lifting the weighing pan is effected before horizontally fixing the weighing pan.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of". However, referring to "the at least one" of a member shall be construed as referring to all of the at least one members, unless stated differently, whereas referring to "a" member out of at least one member shall be construed as referring to any one out of the at least one members. It is moreover noted that in the context of the present application the terms "bordering" and "adjacent" as well as "bordering" and "adjacent to" are considered as synonyms.

The locking device, in exemplary embodiments, is a locking mechanism and comprises an actuation device configured to actuate at least one element of the locking mechanism. The term locking mechanism shall in particular be applied when the locking device is provided as a mechanical locking mechanism. The actuation device is, as will be appreciated by a skilled person, provided and configured to effect, by actuation of the locking mechanism, locking, or fixing, respectively, of the weighing pan relative to the chassis, and/or releasing the weighing pan. The actuation device may in instances be an electromagnetic actuator. A mechanical locking mechanism may be configured to actively lock as well as release the weighing pan by active actuation, but may in other embodiments be configured to actively effect only one of the locking and releasing functions, while a passive return element, such as a spring, may be provided to effect the other one of locking and releasing functions. In other non-limiting instances, fixing the weighing pan may be achieved magnetically, or solenoid-operated, whereby, for instance, a solenoid may be provided on the chassis and configured for interacting with a magnetic element attached to the weighing pan or any member fixedly attached to the weighing pan. Actuation of the locking device would be effected by an electric current running through the solenoid.

Actuation of the at least one element of the locking mechanism by the actuation device may be triggered by the state of an element of the weighing device or of a system comprising the weighing device, and/or the current procedural step in a weighing cycle. The state (open/closed) of a weighing chamber door, the position of a weight preparation table or a robotic device, whether an object was placed on the weighing pan in a previous step of a weighing cycle or whether an object will be removed from or placed on the weighing pan in a subsequent step of the weighing cycle, and whether a weighing value was read out in a previous step of the weighing cycle or whether a weighing value will be read out in a subsequent step of the weighing cycle are examples of events that may trigger said actuation. Accordingly, the weighing device may be configured to effect actuation of the at least one element of the locking mechanism dependent on said state of an element of the weighing device or of a system comprising the weighing device, wherein said state includes, while not being limited to, the above-provided examples and/or combinations thereof. The device might for example comprise at least one sensor to detect a state and a controller in functional connection with the at least one sensor for detecting a state and with the actuation device, wherein said controller is adapted and configured for controlling the actuation of the at least one element of the locking mechanism dependent upon the thus detected state.

In more specific embodiments, the locking mechanism may comprise at least one element which is a pivotable lever directly or through intermediate members connected to and pivotable by the actuation device. A form lock feature adapted and configured to lock the weighing pan by positive locking may in particular be provided on the lever distal from the pivot point of the lever.

The locking device may in embodiments be adapted and configured to lock the weighing pan by positive locking. For instance, at least one element of the locking device may be provided with a form lock feature comprising one of a recess or a projection which is arranged and configured for locking with a counterpart projection or recess, respectively, provided at the weighing pan or any member fixedly attached to the weighing pan.

At least one element of the locking mechanism which is actuatable by the actuation device may comprise a form lock feature for effecting positive locking for fixing the weighing pan relative to the chassis. For one instance, a form lock feature adapted and configured to lock the weighing pan by positive locking may be provided on a lever as described above and distal from the pivot point of the lever.

The form lock feature may in embodiments be shaped so as to fix the weighing pan in a well-defined, unique position when form lock is effected. In other words, the form lock feature is shaped so as to provide a centering function with a counterpart member which is provided at the weighing pan or at an element which is fixedly attached to the weighing pan. For instance, the form lock feature which is provided on the at least one element of the locking mechanism which is actuatable by the actuation device may comprise or be a funnelling or tapering concave locking feature, such as, while not limited to, an essentially V-shaped notch or opening configured to receive a counterpart convex element such as a counterpart pin, or be, for another instance, a convex element, such as, while not limited to, a pin, in particular a pointed pin, configured to be received in a counterpart funnelling and thus centering concave locking feature. "Funnelling" and "tapering" shall be construed and are used as synonyms.

In exemplary embodiments of the weighing pan, the weighing pan is a hanging weighing pan (also called "low-level pan"). In an embodiment, the weighing pan is suspended by a suspension structure at a position above a top face of the weighing pan. The suspension structure may more specifically be a suspension cradle. The weighing pan may be suspended at a position at or near the ceiling of a weighing chamber in which the weighing pan is arranged.

The locking device may be adapted and configured to effect the positive lock with the weighing pan. The locking device may in other embodiments be adapted and configured to effect the positive lock with a suspension structure through which the weighing pan is suspended. In particular, the weighing pan may be the hanging weighing pan and the locking device may be adapted and configured to effect the positive lock with the suspension structure of the hanging weighing pan.

The weighing device may comprise a balance, in particular a comparator balance. High precision comparator balances benefit from the advantageous effects of the herein disclosed subject matter. The previously and hereinafter mentioned weighing chamber is the weighing chamber of the balance if not stated otherwise in an explicit manner.

In embodiments, in which the weighing device is a balance, in particular a comparator balance, the weighing device is not a weighing system comprising, for example, a robotic device and/or a storage area (also called "magazine") for objects to be weighed. Rather, the weighing device may be the weighing device or balance of such a system by integrating it in the system. Also in these embodiments, any previously and hereinafter mentioned weighing chamber is the weighing chamber of the balance if not stated otherwise in an explicit manner. In particular, the weighing chamber is not a chamber for the weighing system, for example a chamber that accommodates the weighing system or its main elements, such as the weighing device, a robotic device, a storage area etc.

The herein disclosed weighing device may further comprise at least one weight preparation table. The preparation table may also be referred to in the art as a "preparation area" (which shall not be mixed up with the preparation area referred to below in the present disclosure), "transfer pan" or "weighing lift". The at least one weight preparation table and the weighing pan are displaceable relative to each other along at least two linear axes, wherein a first one of the at least two linear axes is a horizontal axis and a second one of the at least two linear axes is a vertical axis. The displaceability is restricted to purely linearly translational displacement along the at least two linear axes. In particular, the at least one weight preparation table and/or the weighing pan therefore has/have only linear degrees of freedom. That is to say, in other words, an actuator device for displacing the at least one weight preparation table is adapted and configured to displace the at least one weight preparation table exclusively along at least two linear axes, but has no rotational axis to impose a movement, rotation, or pivoting on the at least one weight preparation table, and/or an actuator device for displacing the weighing pan is adapted and configured to displace the weighing pan exclusively along at least two linear axes, but has no rotational axis to impose a movement, rotation, or pivoting on the weighing pan.

The displacement along the first one of the at least two linear axes is a horizontal displacement and the displacement along the second one of the at least two linear axes is a vertical displacement. The skilled person will readily appreciate that a weighing device has a clear and unique top and bottom and thus a clear and unique up-down orientation. The terms "vertical" and "horizontal" are thus clearly defined orientations in the context of a weighing device, as well as top and bottom sides are clearly defined.

In embodiments, the relative displacement between the at least one weight preparation table and the weighing pan is a displacement along exactly two linear axes.

The horizontal displacement is such that the at least one weight preparation table is positionable at at least two different positions relative to the weighing pan. In a first one of the at least two different positions the at least one weight preparation table is laterally offset from a centre of the weighing pan in a vertical view, i.e., non-overlapping the centre of the weighing pan in a vertical view. In a second one of the at least two different positions, the at least one weight preparation table is overlapping the centre of the weighing pan in the vertical view. The lateral offset from the centre may be such that there is, in a vertical view, no overlap between the at least one weight preparation table and the weighing pan, or it may be such that there is still an overlap between the at least one weight preparation table and the weighing pan.

According to a first example, the horizontal displacement is such that there is, in a vertical view, an at least partial overlap between the at least one weight preparation table and the weighing pan in the first one of the at least two different positions and in the second one of the at least two different positions. In each one of the at least two different positions, this means in the first and second positions, an edge of the at least one weight preparation table has a horizontally measured distance from an edge of the weighing pan. In the first one of the at least two different positions, the horizontally measured distance of the edge of the at least one weight preparation table from the edge of the weighing pan is different than in the second one of the at least two different positions. The horizontally measured distance of the edge of the at least one weight preparation table from the edge of the weighing pan in the second one of the at least two different positions in particular embodiments is less than 50% of a width of the weighing pan, and may in more particular be 30% or less or 10% or less of the width of the weighing pan. The horizontally measured distance of the edge of the at least one weight preparation table form the edge of the weighing pan in the first one of the at least two different positions in particular embodiments is larger than 50% of the width of the weighing pan, and may in more particular be 70% or more or 90% or more of the width of the weighing pan. The width of the weighing pan, as used above, may in particular be measured parallel to the direction in which the horizontally measured distance of the edge of the at least one weight preparation table form the edge of the weighing pan is measured.

According to a second example, the horizontal displacement is such that the weight preparation table is positionable laterally offset from the weighing pan (first position) as well as at least partially overlapping the weighing pan (second position) in a vertical view. A laterally offset position of a/the weight preparation table from the weighing pan, in the latter examples, may in still more specific embodiments include a position in which there is no overlap between the weighing pan and a/the weight preparation table in a vertical view. Laterally offset from the weighing table shall thus in certain aspects be understood in the sense that there is no overlap between the weighing pan and a/the weight preparation table in a vertical view.

According to a third example, the first one of the at least two different positions of the at least one weight preparation table is at least one of (i) a weight preparation table loading and unloading position and (ii) a waiting position, and the second one of the at least two different positions of the at least one weight preparation table is a weighing pan loading and unloading position. In other words, the horizontal displacement may be such that the at least one weight preparation table can take a first horizontal position relative to the weighing pan and a second horizontal position relative to the weighing pan, wherein the first horizontal position is at least one of a weight preparation table loading and unloading position and a waiting position, and wherein the second horizontal position is a weighing pan loading and unloading position. A loading and unloading position is a position configured for placing an object on top and onto the at least one weight preparation table and the weighing pan, respectively. A waiting position is a position taken by the at least one weight preparation table during weight determination of an object placed on the weighing pan.

It shall be understood that the three above-mentioned examples may include specific combined embodiments in which characteristics of two or more of these examples may be combined, but may as well include specific embodiments in which they may be independent from each other.

The relative vertical displacement is such that a top face of the at least one weight preparation table is positionable at a vertical position which is above a top face of the weighing pan as well as the top face of the at least one weight preparation table is positionable at a vertical position which is below the top face of the weighing pan. That means, a vertical range of motion of the at least one weight preparation table and/or a vertical range of motion of the weighing pan is/are adapted and configured such that an object can by placed, using the at least one weight preparation table, on top of and onto the weighing pan as well as it can be removed, using the at least one weight preparation table, from the weighing pan.

In any case, the relative displacement of the at least one weight preparation table and the weighing pan is adapted and configured such that an object can be placed on top of and onto the weighing pan as well as it can be removed from the weighing pan and be placed lateral from the weighing pan, whereby the weight preparation table at the same time is a transport device for the object between these positions.

In more specific embodiments, the weighing pan and the at least one weight preparation table are enclosed within a weighing chamber of the weighing device, wherein the weighing device is configured to restrict any motion of the at least one weight preparation table and of the weighing pan that contributes to the relative displacement between the at least one weight preparation table and the weighing pan to within the weighing chamber. In particular the at least one weight preparation table cannot move outside the weighing chamber. In particular, each range of motion of the at least one weight preparation table and/or of the weighing pan along each of the axes along which the at least one weight preparation table and, respectively, the weighing pan may be displaced may be restricted to within the weighing chamber. This can be achieved, for instance, while not limited to, in providing an end stop for the at least one weight preparation table and/or the weighing pan, by the design of an actuator for the weight preparation table and/or of an actuator for the weighing pan, and/or a control logic limiting the range of motion of the weight preparation table and/or the weighing pan.

In an embodiment, any motion of the at least one weight preparation table and the weighing pan may be restricted to within the weighing chamber.

A range of motion of a component, in particular the at least one weight preparation table or the weighing pan, may denote a maximum range the component may travel in any direction or, in other words, an envelope of the maximum travel of the component in any direction. This can be achieved, for instance, while not limited to, in providing an end stop for the component, by the design of an actuator for the component, and/or a control logic limiting the range of motion of the component.

In particular one of the following configurations for generating the mentioned relative displacement between the at least one weight preparation table and the weighing pan are preferred, although it is not ruled out that, in addition, a displacement, for example with respect to the weighing chamber, of the weighing pan along a horizontal axis contributes to or causes the relative horizontal displacement between the at least one weight preparation table and the weighing pan:
Configuration A: The at least one weight preparation table displaces, for example with respect to the weighing chamber, along a horizontal axis and along a vertical axis, wherein the weighing pan does not displace, for example with respect to the weighing chamber, expect displacements related to weight determination.
   In particular, any displacement of the weighing pan caused by loading an object onto or unloading an object from the weighing pan are considered as displacements related to weight determination. This means that, for example, movements related to off-center loading an object on the weighing pan, to removing an off-center loaded object from the weighing pan, and/or to off-centre load correction are also covered by the term "displacements related to weight determination".
Configuration B: The at least one weight preparation table displaces, for example with respect to the weighing chamber, along a horizontal axis only, and the weighing pan, in additional to displacements related to weight determination, displaces, for example with respect to the weighing chamber, along a vertical axis only.
Configuration C: The at least one weight preparation table displaces, for example with respect to the weighing chamber, along a horizontal axis and along a vertical axis, and the weighing pan, in additional to displacements related to weight determination, displaces, for example with respect to the weighing chamber, along a vertical axis only.

In more specific embodiments of embodiments according to any one of configurations A-C, the weighing device comprises at least two weight preparation tables, in particular exactly two weight preparation tables. Each of the weight preparation tables is displaceable along a horizontal axis, wherein the at least two weight preparation tables are displaceable along their horizontal axis, this means the horizontal axis along which a specific weight preparation table of the at least two weight preparation tables is displaceable, independently form each other. Again, these displaceabilities, this means the displaceability of a first weight preparation table of the at least two weight preparation tables along its horizontal axis, the displaceability of a second weight preparation table of the at least two weight preparation tables along its horizontal axis and so on, if there are more than two weight preparation tables, are restricted to purely linearly translational displacements. As noted above, this shall be understood such that an actuator device or actuator devices for displacing the weight preparation tables is/are adapted and configured to displace the at least two weight preparation tables exclusively along their linear horizontal axis, but has/have no rotational axis to impose a rotation or pivoting movement around a rotational axis on the at least two weight preparation tables. Again, the weighing device is configured to restrict the range of motion of each of the weight preparation tables to within the weighing chamber. A first one of the at least two weight preparation tables is horizontally displaceable on a first lateral side of the weighing pan and a second one of the at least two weight preparation tables is horizontally displaceable on a second lateral side of the weighing pan. The second lateral side of the weighing pan may for instance be opposite the first lateral side of the weighing pan. In particular embodiments, the respective horizontal axes along which the first and second weight preparation tables are displaceable may be parallel to each other and in more particular embodiments be identical. In additional, in embodiments according to configuration A or C, the respective vertical axes along which the first and second weight preparation tables are displaceable may be parallel to each other and in more particular embodiments be identical.

Independent of the configuration for generating the relative displacement between the at least one weight preparation table and the weighing pan, a weight preparation table, in the sense as used in the framework of the present disclosure, may be used to provide, or prepare, an object or a set of objects to be jointly weighed inside the weighing chamber. In other words, a weight preparation table, in the sense as used in the framework of the present disclosure, is configured to receive not only a single object but also a plurality of objects, that is, at least two objects, on it, to concurrently transport the multitude of objects to the weighing pan for placing them on top of the weighing pan, and to remove them from the weighing pan. A selection of reference weights from a set of reference weights is an example of a plurality of objects.

Further disclosed is a system comprising a weighing device of any type or embodiment outlined above, wherein the system further comprises a robotic device and at least one of a storage area, such as a magazine for objects to be measured, and a preparation area.

In an embodiment of the system, the robotic device is adapted and configured to move an object from the storage area or the preparation area, whatever is present, and forms a pick-up and place-down position for an object to be moved into the weighing chamber by the robotic device, onto the weighing pan and to remove an object from the weighing pan and place it in the storage area or on the preparation area. In particular, the weighing pan may be placed inside a weighing chamber of the weighing device, while the robotic device, the storage area, if present, and the preparation area, if present, are placed outside the weighing chamber.

In another embodiment of the system, the weighing device comprises the at least one weight preparation table and the robotic device which is adapted and configured to move an object from the storage area or the preparation area, whatever is present, and forms a pick-up and place-down position for an object to be moved into the weighing chamber by the robotic device, onto a weight preparation table and remove an object from the weight preparation table and place it in the storage area, if present, or the preparation area, if present. In still more specific embodiments, the weighing pan and the at least one weight preparation table are placed inside a weighing chamber of the weighing device while the robotic device, the storage area, if present, and the preparation area, if present, are placed outside the weighing chamber. In embodiments, it may be provided that the robotic device is not configured and intended to directly place an object or objects from the storage area or the preparation area, whatever is present and forms a pick-up and place-down position for an object to be moved into the weighing chamber by the robotic device, onto the weighing pan, but configured and intended to place an object or objects from the storage area or the preparation area onto a weight preparation table, wherein the weight preparation table in turn is configured to place the object or objects onto the weighing pan and to remove the object or the objects from the weighing pan.

It is understood that the robotic device is a device different from and in addition to an optionally present at least one weight preparation table of the weighing device, and that the storage area, if present, and the preparation area, if present, is/are different from and is/are provided in addition to an optionally present at least one weight preparation table of the weighing device.

In still a further aspect, a method for weight determination is disclosed. The method comprises placing at least one object onto a weighing pan which is functionally coupled to a load cell, taking a reading from the load cell, and removing the object from the weighing pan. The method further comprises fixing the weighing pan relative to a chassis of the weighing device by a locking device prior to placing the at least one object onto the weighing pan and releasing the weighing pan fixation after the at least one object has been placed onto the weighing pan and prior to taking the reading from the load cell. As outlined above, the method yields the advantageous benefit that a deflection of the weighing pan from a resting position or neutral position of the weighing pan in which the weighing pan is in a motionless state without external forces apart from gravitational forces acting thereon can be avoided. The excitation of a swinging motion of the weighing pan by placing an object onto the weighing pan is thus avoided. Objects can thus be placed more precisely on the weighing pan. This results in increased precision of measurement, and may also serve to reduce measurement time as it is not required to wait until a swinging weighing pan has come or has at least essentially come to rest. The weighing pan may further be fixed relative to the chassis of the weighing device by the locking device after the reading from the load cell has been taken and prior to removing the object from the weighing pan. This may in aspects assist in further increasing the latter benefit.

Any element used in the method may correspond to any embodiment of the corresponding element disclosed with respect to the weighing device or the system. In particular, the weighing pan, the at least one object, and the locking device may be according to any embodiment disclosed with respect to the weighing device and the system, respectively.

The method may comprise involving, or be carried out in, a weighing device or system according to any embodiment disclosed. In particular, the method may comprise a step of providing a weighing device or a system according to any embodiment disclosed with respect to the weighing device or the system. Alternatively or in addition, the method may comprise, in embodiments, any step or combination of steps that relate(s) to features of elements of the weighing device and/or the system.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### Brief description of drawings

The subject matter of the present disclosure is now to be explained in more detail by means of selected exemplary embodiments shown in the accompanying drawings. The figures show
- Fig. 1: a first exemplary embodiment of a weighing device as herein suggested;
- Fig. 2: a detailed view of the locking mechanism of the weighing device of figure 1;
- Fig. 3: a first exemplary embodiment of a weighing device as herein suggested, further comprising weight preparation tables and a weighing chamber;
- Fig. 4: a detail of the weighing device of figure 3, illustrating details of the weighing pan and a weight preparation table;
- Fig. 5: a diagram outlining an exemplary embodiment of the herein suggested method.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### Description of embodiments

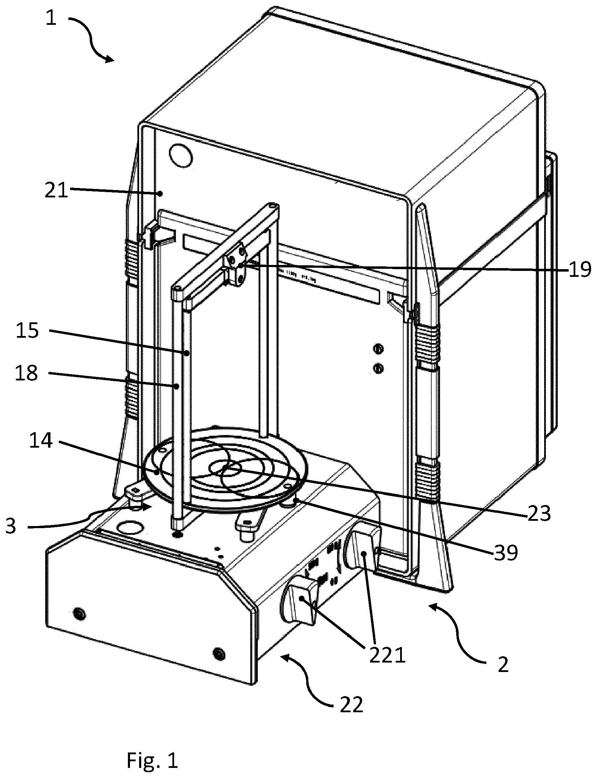

A first, non-limiting embodiment of the weighing device of the herein disclosed is shown in figure 1. Weighing device 1 comprises chassis 2, which in turn comprises housing 21 with annex 22 attached thereto. Weighing device 1 further comprises weighing pan 14. Weighing pan 14 comprises a centre 23, is suspended by a suspension cradle 15, and is, through suspension cradle 15, functionally coupled to a load cell which is essentially a transducer for transforming the physical signal depending on the weight provided on weighing pan 14 to an electrical signal. The load cell is provided inside housing 21 and is thus not shown, while being familiar to a person having skill in the art. Suspension cradle 15, with weighing pan 14 attached thereto, is supported by frame 18. Frame 18, in turn, is supported on a L-shaped beam extending inside annex 22 and into housing 21, where it couples to the load cell. The L-shaped beam, as being provided inside annex 22, is not shown and is not of primary relevance to the herein disclosed subject matter. Housing 21 may further accommodate a power supply, control electronics and evaluation electronics. Annex 22 accommodates calibration weights and/or dial weights, which might be operated by rotary switches 221. Frame 18 comprises, in the exemplary embodiment, a bearing body which is shaped as a waisted body of revolution, which essentially resembles two cones meeting at their thinner ends. Suspension cradle 15, at its upper side, also comprises a waisted body of revolution bearing on the bearing body of frame 18, wherein the axes of the two waisted bodies of revolution lie transverse to each other and the waists of the bearing bodies are received withing each other. Jointly, the two waisted bodies form suspension arrangement 19. Suspension arrangement 19 provides a mobile support of the weighing pan by the frame such that weighing pan 14 is free to move around the support point and relative to the chassis within relatively wide set limits, which is important for the measurement accuracy. Annex 22 further accommodates a locking device which is provided as a mechanical locking mechanism 3. Locking mechanism 3 is adapted and configured to selectively fix and lock weighing pan 14 relative to annex 22 and thus to chassis 2. As noted above, the term locking mechanism shall be applied when locking device 3 is provided as a mechanical mechanism. More in detail, locking device, i.e, locking mechanism, 3 is adapted and configured to selectively engage with pins 39 and release pins 39 provided on the bottom of weighing pan 14, wherein only one of pins 39 is visible in the present depiction. As will be appreciated, when pins 39 are engaged by locking mechanism 3, the position of weighing pan 14 is horizontally fixed and locked relative to chassis 2 such that swinging movements of the weighing pan are inhibited. As will further be appreciated, when the position of weighing pan 14 is locked with respect to chassis 2, objects can be placed onto weighing pan 14, or can be removed from weighing pan 14, without deflecting weighing pan 14 from its resting position or otherwise inducing oscillating swings of weighing pan 14.

In embodiments, it may be provided that locking device 3 is adapted and configured to be reversibly brought into contact with a bottom face of the weighing pan and into a support relationship with the weighing pan in which it supports the weighing pan. This may include lifting weighing pan 14 if such degree of freedom is provided by the functional weighing pan support of the weighing device. In the present exemplary embodiment, for instance, the waisted body of revolution of suspension cradle 15 which in a functional weighing mode of the weighing device bears on the bearing body of frame 18 may be lifted off the bearing body of frame 18 by locking device 3 and while weighing pan 14 is supported by locking device 3, thereby disconnecting suspension arrangement 19. Consequently, weighing pan 14 is completely disconnected from frame 18, and thus eventually from the load cell. If weighing pan 14 is lowered again, the waisted bodies forming suspension arrangement 19 will self-centre with each other and hence again functionally couple weighing pan 14 to the load cell.

As noted above, the skilled person will readily appreciate that a bottom and top side of weighing device 1, just like that of any weighing device of the herein disclosed type, are uniquely defined and identifiable by a skilled person by the setup of the weighing device, and thus terms referring to a vertical orientation of a weighing device, like top, bottom, above, below, higher, lower and so forth, are readily identified by virtue of the structure of the weighing device and thus have a clear and unique meaning to a person having ordinary skill in the art in the context of a weighing device.

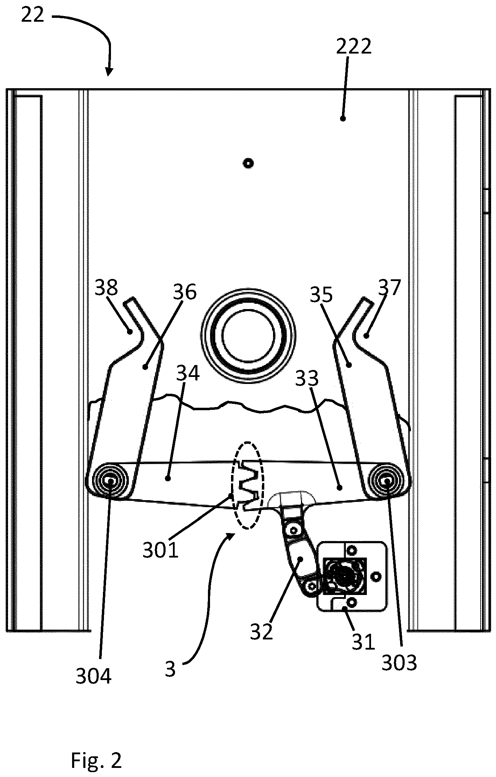

Figure 2 shows a plan view onto annex 22, with the weighing pan and a part of cover 222 of annex 22 removed, so as to allow a view of elements of locking mechanism 3 which are arranged inside annex 22. Locking mechanism 3 comprises an actuator device 31, which, through drive lever 32 is functionally coupled to crank arm 33. Crank arm 33 in turn is fixedly coupled to locking lever 35. Crank arm 33 and locking lever 35 are both fixedly attached to pivot axle 303, which is rotatably mounted in cover 222 of annex 22. Thus, a displacement of drive lever 32 which is induced by actuator device 31 imparts a joint pivoting action of crank arm 33 and locking lever 35 around a pivot axis defined by pivot axle 303. Actuator device 31, drive lever 32 and crank arm 33 are arranged below cover 222, or inside annex 22, respectively, while locking lever 35 is arranged on top of cover 222, or outside and on top of annex 22, respectively. Pivot axle 303 extends through cover 222 of annex 22. Second crank arm 34 and second locking lever 36 are provided mirrored to first crank arm 33 and first locking lever 35. Analogous to first crank arm 33 and first locking lever 35, second crank arm 34 and second locking lever 36 are fixedly connected to each other and rotatably mounted in cover 222 by second pivot axle 304. First crank arm 33 and second crank arm 34 are drivingly connected to each other by gearing 301. Thus, when crank arm 33 together with locking lever 35 are set in a pivoting motion by actuator device 31 through drive lever 32, second crank arm 34 together with second locking lever 36 are set in synchronous and mirrored pivoting motion, wherein the sense of rotation of the pivoting motion of first crank arm 33 together with first locking lever 35 and the sense of rotation of the pivoting motion of second crank arm 34 together with second locking lever 36 are opposite to each other. In other words, upon actuation by actuator device 31 the distal sections of locking levers 35 and 36 move in opposite direction at the same speed, or, in other words, converge towards each other or move away from each other synchronously and symmetrically. First and second locking levers 35 and 36 comprise centering locking features 37 and 38. Centering locking features 37 and 38 are generally V- or U-shaped notches or, more generally spoken, funnelling concave locking features. Each of centering locking features 37 and 38 comprises an apex and two legs and thus funnel towards the apex. A freely movable counterpart element, when caught inside one of locking features 37 and 38, will be centered inside the locking feature at the apex of the respective funnelling and thus centering locking feature. Hence, a counterpart element, when caught inside one of locking features 37 and 38, will be drawn into a well-defined unique position relative to the respective locking lever. A pair of pins 39 provided on the bottom of weighing pan 14, cf. figure 1, will thus, by further virtue of the synchronous and symmetric movement of locking levers 35 and 36, always be received in locking features 37 and 38 in a unique position and weighing pan 14 will be fixed and locked in a well-defined and unique position with respect to annex 22, and thus with respect to chassis 2. The wide mouth of each locking feature 37 and 38 allows to capture a counterpart locking element, such as pin 39 shown in figure 1, in a relatively large area. The locking mechanism is thus suited to capture, fix and lock the weighing pan even if the weighing pan is already in an oscillating movement. It will be appreciated that the exemplary locking device shown in figure 2 is not configured to be brought into a support relationship with the weighing pan. However, such embodiments are readily conceived by a person having skill in the art. For instance, means may be provided to enable a vertical movement of locking device 3, or a vertically moveable support element may be added to locking device 3.

It is understood that a weighing chamber may be provided enclosing weighing pan 14, suspension cradle 15 and frame 18, so as to protect floating weighing pan 14 from environmental interferences, like air draft, temperature changes and so forth.

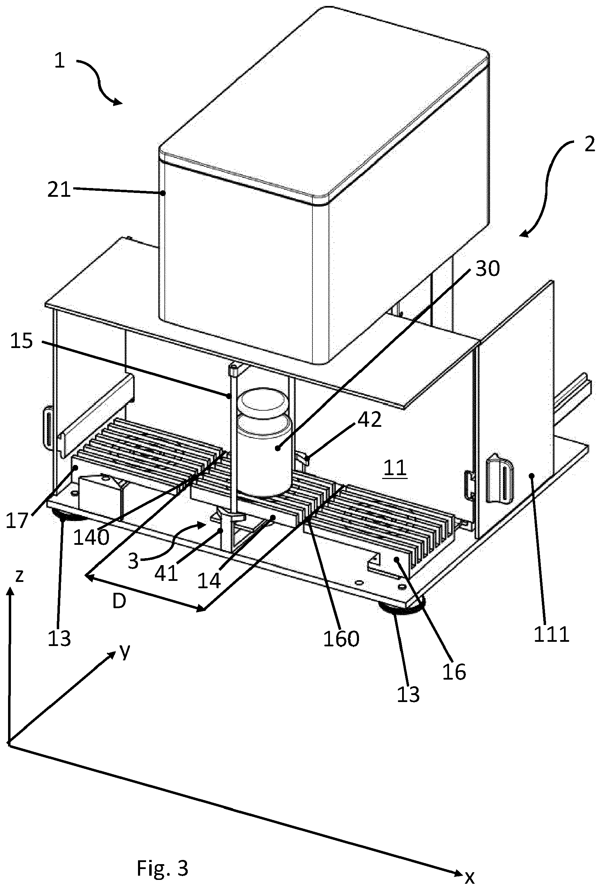

Figure 3 outlines a further exemplary, while non-nonlimiting, embodiment of the herein described weighing device. Weighing device 1 comprises weighing chamber 11 which is provided to protect mechanical measurement hardware from external interferences, like air draft, temperature changes and so forth. Generally spoken, weighing chamber 11 forms a closed volume inside which the measurement takes place. Weighing chamber 11 comprises weighing chamber door 111 which may be opened to allow access to the interior of weighing chamber 11 and transfer of objects into and out of weighing chamber 11, but shall generally be closed during measurements and, preferably, a certain time prior to measurements. As the skilled person will readily appreciate, a front wall of weighing chamber 11 has been omitted in the present depiction so as to allow a view on the interior of weighing chamber 11. Further, weighing device 1 comprises chassis 2 further comprising housing 21, which comprises, for instance, control and processing electronics. In the exemplary embodiment shown, housing 21 also houses the load cell. On the bottom of weighing device 1, weighing device 1 comprises feet 13 to support chassis 2 on a base on which weighing device 1 is placed. In any case, the structure of the weighing device clearly defines a top and a bottom of the weighing device. Thus, a vertical direction, represented by arrow z, is clearly defined with respect to the weighing device, and moreover top and bottom sides are clearly defined. Further, horizontal directions x and y may be defined, wherein "horizontal" is also clearly defined with respect to weighing device 1. Inside weighing chamber 11 weighing pan 14 and two weight preparation tables 16 and 17 are provided. An object or, more specifically, weight 30 is exemplarily shown on weighing pan 14. The centre 23 of the weighing pan cannot be seen in figure 3 because weight 30 is arranged on the weighing pan 14. Weighing pan 14 is functionally coupled to the load cell which is arranged inside housing 21. Weighing pan 14, in the exemplary embodiment, is a hanging weighing pan which is suspended, for instance, at or proximate to the ceiling of weighing chamber 11, through suspension cradle 15. The balance of weighing device 1 is for instance a comparator balance which essentially compares the weight of a test object or multiple test objects, i.e., at least one test object or a set of at least one test object, to the weight of a reference weight or multiple reference weights, i.e. at least one reference weight or a set of at least one reference weight. It is understood that the at least one test object may actually comprise only one object to be weighed plus one or more offset weights of a known weight so as to shift the total weight to be measured into the measurement range of the balance. In order to increase accuracy of the measurements and assess the accuracy, it may be provided that the at least one test object and the at least one reference weight are repeatedly and alternatingly placed on weighing pan 14 and measurements taken. Each set of test weights or reference weights may be referred to as objects to be weighed. To this extent, the weight preparation tables 16 and 17 are provided inside weighing chamber 11. The test weights and reference weights, respectively, may be placed onto weight preparation tables 16 and 17 before taking the actual measurement and while weighing chamber door 111 is open. For instance, at least one test weight may be placed onto weight preparation table 16 as a first set of at least one object to be weighed, while at least one reference weight may be placed onto weight preparation table 17 as a second set of at least one object to be weighed. It is understood that as well the at least one test weight may be placed onto weight preparation table 17 while the at least one reference weight may be placed onto weight preparation table 16. That is, the objects to be weighed are prepared on weight preparation tables 16 and 17. Weight preparation tables 16 and 17 are displaceable inside weighing chamber 11 and configured to place the respective sets of at least one object provided thereon onto weighing pan 14 as well as to remove the set of at least one object from weighing pan 14 while placing them on the respective weight preparation table again. Said loading and unloading of the weighing pan may be effected in displacing the weight preparation tables in purely linear movements along horizontal axis x and vertical axis z, without applying any rotational or pivoting motion around a rotation or pivot axis. For instance, while performing a linear movement along horizontal axis x, weight preparation table 16 takes different positions relative to weighing pan 14, in which an edge 160 of weight preparation table has different distances D from an edge 140 of weight preparation table 14. Thus, after providing the sets of at least one object to be weighed on the weight preparation tables 16 and 17, weighing chamber door 111 is and remains closed and the entire measurement process, comprising repeated measurements, can take place inside the closed weighing chamber and protected from external interferences.

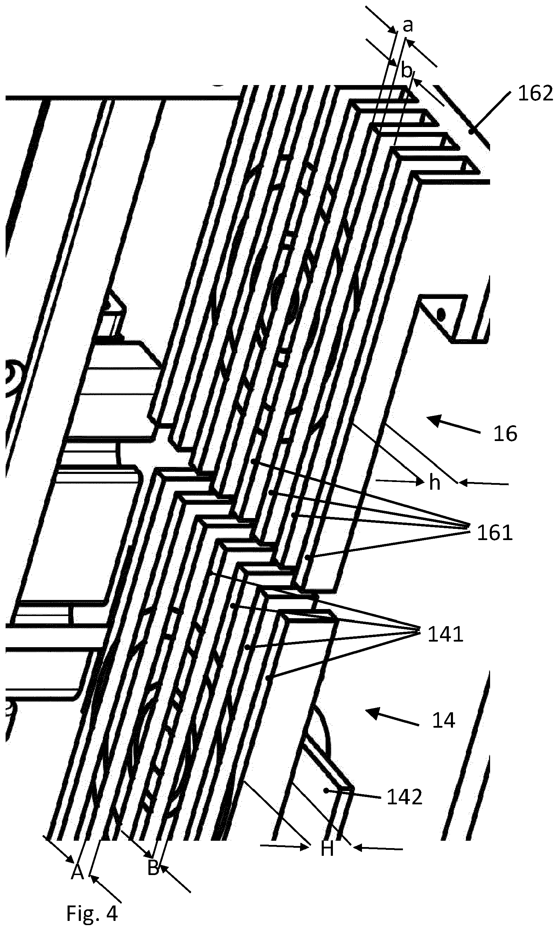

Figure 4 outlines certain detail of weighing pan 14 and weight preparation table 16 of the present non-limiting embodiment. It shall be understood that any statement made with respect to weight preparation table 16 also applies to weight preparation table 17. Weighing pan 14 comprises bars 141 which are arranged on a base plate 142. Weight preparation table 16 comprises bars 161 which cantilever from a base 162 and towards weighing pan 14. Bars 141 of weighing pan 14 are parallel to each other and parallel to bars 161 of weight preparation table 16. Bars 161 of weight preparation table 16 extend parallel to each other and parallel to bars 141 of weighing pan 14. Bars 141 of weighing pan 14 and bars 161 of weight preparation table 16 extend parallel to a horizontal displacement axis of weight preparation tables 16 and 17, which, in the present embodiment, corresponds to horizontal axis x. The top edges of bars 141 of weighing pan 14 jointly form a top face of weighing pan 14. The top edges of bars 161 of weight preparation table 16 jointly form a top face of weight preparation table 16. Bars 141 of weighing pan 14 have a width A and are arranged with voids between each pair of neighbouring bars, wherein the width of the voids between neighbouring bars 141 is denoted B. The voids have a clear height H measured from the top of a bar 141 to the base plate 142 which, in the present non-nonlimiting embodiment, corresponds to height of the bars. Bars 161 of weight preparation table 16 have a width a and are arranged with voids between each pair of neighbouring bars, wherein the width of the voids between neighbouring bars 161 is denoted b. Bars 161 of weight preparation table 16 have a height h. The width B of the voids between neighbouring bars 141 of weighing pan 14 is dimensioned such that bars 161 of weight preparation table 16 can be received within the voids between neighbouring bars 141 of weighing pan 14. That is, in the presently shown exemplary embodiment, the width B of the voids between neighbouring bars 141 of weighing pan 14 is larger than the width of bars 161 of weight preparation table 16. Likewise, the width b of the voids between neighbouring bars 161 of weight preparation table 16 is dimensioned such that bars 141 of weighing pan 14 can be received in the voids between neighbouring bars 161 of weight preparation table 16. That is, in the presently shown exemplary embodiment, the width b of the voids between neighbouring bars 161 of weight preparation table 16 is larger than the width A of the bars 141 of weighing pan 14. Further, the bars 161 of weight preparation table 16 are, along the horizontal displacement axis x of weight preparation table 16, aligned or in registry with the voids between neighbouring bars 141 of weighing pan 14, and the bars 141 of weighing pan 14 are, along the horizontal displacement axis x of weight preparation table 16, aligned and in registry with the voids between neighbouring bars 161 of weight preparation table 16. Further, the height h of the bars 161 of weight preparation table 16 is smaller than the clear height H of the voids between neighbouring bars 141 of weighing pan 14. The vertical range of motion of weight preparation table 16 is provided such that the top edges of bars 161 of weight preparation table 16 may be placed above as well as below the top edges of bars 141 of weighing pan 14. That is, the top face of weight preparation table 16 may be placed vertically higher of lower than the top face of weighing pan 14, which is, due to the above-mentioned relative dimensions of the height h of bars 161 of the weight preparation table and the height H of the voids between neighbouring bars 141 of weighing pan 14, also possible when bars 161 of weight preparation table 16 are received in the voids between neighbouring bars 141 of weighing pan 14.

Referring again to figure 3, weighing device 1 comprises a pair of locking jaws 41 and 42 forming part of a locking device 3. Locking jaws 41 and 42 are functionally coupled to an actuator device and to each other in a manner so as to cause a synchronous and symmetric linear displacement towards and away from each other. The actuator and gearing for effecting said synchronous and symmetric movement are not visible, but possible embodiments are well-known to a skilled person. As will be appreciated, when locking jaws 41 and 42 move towards each other they will eventually capture cradle 15. As can be seen, the regions of locking jaws 41 and 42 making the contact with cradle 15 are each shaped with an apex and two legs so as to achieve a well-defined and unique locking position of weighing pan 14 with respect to chassis 2. Thus, locking device 3, including locking jaws 41 and 42, enables to fix and lock the position of weighing pan 14 prior to placing objects onto weighing pan 14 by weight preparation tables 16 and 17 and thus to avoid that a swinging motion of floating weighing pan 14 is induced by loading and unloading weighing pan 14 through weight preparation tables 16 and 17.

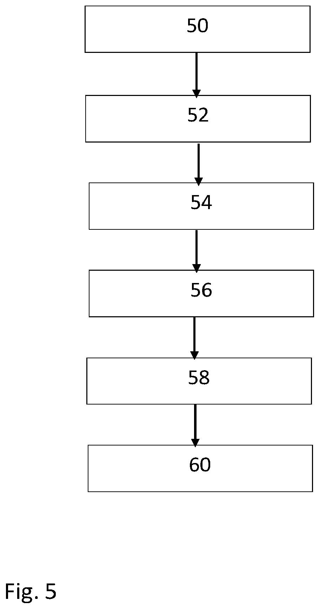

A method for weight determination applying the herein disclosed weighing device is illustrated in figure 5. The method comprises fixing the weighing pan relative to the chassis of the weighing device by a locking device at step 50 prior to placing at least one object onto the weighing pan at step 52. The weighing pan is released at step 54 after the at least one object has been placed onto the weighing pan and a weight reading is taken from a load cell to which the weighing pan is functionally coupled at step 56. Optionally, after the weight reading has been taken, the weighing pan is again fixed and locked relative to the chassis of the weighing device at step 58 prior to removing the at least one object from the weighing pan at step 60. Optionally, if such functionality is included in the locking device, the locking device may by brought into support relationship with the weighing pan prior to step 50 or between steps 50 and 52. In said case, the support relationship needs to be terminated prior to taking the weight reading at step 56, which termination may be performed between steps 52 and 54, or between steps 54 and 56, such that the weighing pan is fully released before taking readings from the load cell. The locking device may further be brought into locking relationship with the weighing pan before removing the at least one object in step 60, which may take place between steps 56 and 58 or between steps 58 and 60.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### Reference signs list

- 1: Weighing device
- 2: Chassis
- 3: Locking device, locking mechanism
- 11: Weighing chamber
- 13: Feet of weighing device
- 14: Weighing pan
- 15: Suspension structure, suspension cradle
- 16: Weight preparation table
- 17: Weight preparation table
- 18: Frame
- 19: Suspension arrangement
- 21: Housing of weighing device
- 22: Annex
- 23: Centre of the weighing pan
- 30: Object
- 31: Actuator device
- 32: Drive lever
- 33: Crank arm
- 34: Crank arm
- 35: Locking lever
- 36: Locking lever
- 37: Locking feature
- 38: Locking feature
- 39: Pin
- 41: Locking jaw
- 42: Locking jaw
- 50: Method step
- 52: Method step
- 54: Method step
- 56: Method step
- 58: Method step
- 60: Method step
- 111: Weighing chamber door
- 140: Edge of weighing pan
- 141: Bar of weighing pan
- 142: Base plate of weighing pan
- 160: Edge of weight preparation table
- 161: Bar of weight preparation table
- 162: Base of weight preparation table
- 221: Rotary switches
- 222: Cover of annex
- 301: Gearing
- 303: Pivot axle
- 304: Pivot axle
- a: Width of a bar of a weight preparation table
- b: Width of a void between neighbouring bars of a weight preparation table
- h: Height of a bar of a weight preparation table
- x: Horizontal direction
- x: Horizontal direction
- y: Horizontal direction
- z: Vertical direction
- A: Width of a bar of the weighing pan
- B: Width of a void between two neighbouring bars of the weighing pan
- D: Distance of edge of weight preparation table from edge of weighing pan
- H: Clear height of a void between neighbouring bars of the weighing pan

## Claims

1. A weighing device (1) comprising a chassis (2), a load cell, and a weighing pan (14) functionally coupled to the load cell, the weighing device further comprising a locking device (3) adapted and configured to selectively fix the weighing pan relative to the chassis of the weighing device.

2. The weighing device according to claim 1, wherein the locking device (3) is a locking mechanism and comprises an actuation device (31) configured to actuate at least one element (32, 33, 34, 35, 36) of the locking mechanism.

3. The weighing device according to the preceding claim, wherein the at least one element of the locking mechanism comprises at least one pivotable lever (35, 36) connected to and pivotable by the actuation device (31).

4. The weighing device according to any of the preceding claims, wherein the locking device (3) is adapted and configured to lock the weighing pan (14) by positive locking.

5. The weighing device according to claim 4 when dependent upon at least one of claims 2 and 3, wherein at least one element (35, 36) of the locking mechanism (3) which is actuatable by the actuation device comprises a form lock feature (37, 38) for effecting the positive locking for fixing the weighing pan (14) relative to the chassis (2).

6. The weighing device according to the preceding claim, wherein the form lock feature (27, 38) is shaped so as to fix the weighing pan in a well-defined, unique position when positive locking is effected.

7. The weighing device according to any of the preceding claims, wherein the weighing pan is a hanging weighing pan (14) which is suspended by a suspension structure (15) at a position above a top face of the weighing pan.

8. The weighing device according to any of claims 4 through 7, wherein the locking device (3) is adapted and configured to effect a positive lock with the weighing pan (14).

9. The weighing device according to claim 7 when dependent upon any of claims 4 through 6, wherein the locking device (3) is adapted and configured to effect a positive lock with the suspension structure (15).

10. The weighing device according to any of the preceding claims, wherein the weighing device comprises or is a comparator balance.

11. The weighing device according to any of the preceding claims, wherein the weighing device further comprises at least one weight preparation table (16, 17), wherein the at least one weight preparation table (16, 17) and the weighing pan (14) are displaceable relative to each other along at least two linear axes (x, z), wherein a first one of the at least two linear axes is a horizontal axis (x) and a second one of the at least two linear axes is a vertical axis (z), wherein displaceability is restricted to purely linear translational displacement along the at least two linear axes,
wherein the displacement along the first one of the at least two linear axes (x) is a horizontal displacement and the displacement along the second one of the at least two linear axes (z) is a vertical displacement,
wherein the horizontal displacement is such that the at least one weight preparation table is positionable at at least two different positions relative to the weighing pan (14) , wherein in a first one of the at least two different positions the at least one weight preparation table is laterally offset from a centre (23) of the weighing pan in a vertical view, and wherein in a second one of the at least two different positions the at least one weight preparation table is overlapping the centre of the weighing pan in the vertical view,
and wherein the vertical displacement is such that a top face of the at least one weight preparation table is positionable at a vertical position which is above a top face of the weighing pan as well as the top face of the at least one weight preparation table is positionable at a vertical position which is below the top face of the weighing pan.

12. The weighing device according to the preceding claim, wherein the weighing pan (14) and the at least one weight preparation table (16, 17) are enclosed within a weighing chamber (11) of the weighing device, wherein the weighing device is configured to restrict the any motion of the at least one weight preparation table (16, 17) and of the weighing pan that contributes to the relative displacement between the at least one weight preparation table and the weighing pan to within the weighing chamber (11).

13. A system comprising a weighing device (1) according to any of claims 1 through 10, a robotic device, and at least one of a storage area and a preparation area, wherein the robotic device is adapted and configured to move an object (30) from the storage area, if present, or the preparation area, if present, onto the weighing pan (14) and remove an object from the weighing pan and place it in the storage area or on the preparation area, wherein in particular the weighing pan (14) is placed inside a weighing chamber (11) of the weighing device and the robotic device, the storage area, if present, and the preparation area, if present, are placed outside the weighing chamber.

14. A system comprising a weighing device according to any of claims 11 and 12, a robotic device, and at least one of a storage area and a preparation area, wherein the robotic device is adapted and configured to move an object (30) from the storage area, if present, or the preparation area, if present, onto the at least one weight preparation table (16, 17) and remove an object from the at least one weight preparation table and place it in the storage area or on the preparation area, wherein in particular the weighing pan (14) and the at least one weight preparation table (16, 17) are placed inside a weighing chamber (11) of the weighing device and the robotic device, the storage area, if present, and the preparation area, if present, are placed outside the weighing chamber of the weighing device.

15. A method for weight determination, comprising placing (50) at least one object onto a weighing pan (14) which is functionally coupled to a load cell, taking a reading (56) from the load cell, and removing (60) the object from the weighing pan,
the method further comprising fixing (52) the weighing pan relative to a chassis (2) of the weighing device by a locking device (3) prior to placing the at least one object onto the weighing pan, releasing (54) the weighing pan after the at least one object has been placed onto the weighing pan and prior to taking the reading from the load cell, and in particular further fixing (58) the weighing pan relative to the chassis of the weighing device by the locking device after the reading from the load cell has been taken and prior to removing (60) the at least object from the weighing pan.
